# EUROPÄISCHE PATENTSCHRIFT

(11) **EP 3 850 451 B1**
(45) Veröffentlichungstag und Bekanntmachung des Hinweises auf die Patenterteilung: **06.12.2023**
(21) Anmeldenummer: 19755883.6
(22) Anmeldetag: 15.08.2019
(51) Int. Cl.: G05B 23/02

(54) **VERFAHREN ZUR VERBESSERUNG DER MESSPERFORMANCE VON FELDGERÄTEN DER AUTOMATISIERUNGSTECHNIK**
METHOD FOR IMPROVING THE MEASURING PERFORMANCE OF AUTOMATION FIELD DEVICES
PROCÉDÉ POUR AMÉLIORER LA PERFORMANCE DE MESURE D'APPAREILS DE TERRAIN DE LA TECHNIQUE D'AUTOMATISATION

(30) Priorität: 13.09.2018 DE 102018122411
(43) Veröffentlichungstag der Anmeldung: 21.07.2021
(73) Patentinhaber: Endress+Hauser SE+Co. KG, 79689 Maulburg (DE)
(72) Erfinder: NIEDERER, Manfred, 87527 Sonthofen (DE); ROBL, Stefan, 46569 Hünxe (DE); BINKERT, Ervin, 4313 Möhlin (DE); MALINOVSKIY, Alexey, 79689 Maulburg (DE); OEHME, Heiko, 07749 Jena (DE); KHADIKOV, Zurab, 79189 Bad Krozingen (DE); KAISER, Ulrich, 4057 Basel (DE)
(74) Vertreter: Koslowski, Christine Adelheid
(86) Internationale Anmeldenummer: PCT/EP2019/071896
(87) Internationale Veröffentlichungsnummer: WO 2020/052899

(56) Entgegenhaltungen:
- DE-A1- 10 048 826
- DE-A1-102016 123 338
- US-A1- 2008 015 814
- US-A1- 2016 142 160

## Beschreibung

Die Erfindung betrifft ein Verfahren zur Verbesserung der Messperformance von Feldgeräten der Automatisierungstechnik.

In Automatisierungsanlagen, insbesondere in Prozess- und Fabrikautomatisierungsanlagen, werden vielfach Feldgeräte eingesetzt, die zur Erfassung und/oder Beeinflussung von Prozessvariablen dienen. Zur Erfassung von Prozessvariablen eines gasförmigen, flüssigen oder festen Mediums werden Sensoren verwendet, die beispielsweise in Füllstandsmessgeräte, Durchflussmessgeräte, Druck- und Temperaturmessgeräte, pH-Redoxpotentialmessgeräte, Leitfähigkeitsmessgeräte, Spektrometer, usw. integriert sind, welche die entsprechenden Prozessvariablen Füllstand, Durchfluss, Druck, Temperatur, pH-Wert, Leitfähigkeit, chemische Zusammensetzung des Mediums erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die in einer Automatisierungsanlage angeordnet sind. Eine Vielzahl solcher Feldgeräte wird von der Firma Endress + Hauser hergestellt und vertrieben.

In Industrieanlagen erfolgt die Kommunikation zwischen zumindest einer übergeordneten Steuereinheit und den Feldgeräten in der Regel über ein Bussystem, wie beispielsweise Profibus^{®} PA, Foundation Fieldbus^{®} oder HART^{®}. Die Bussysteme können sowohl drahtgebunden als auch drahtlos ausgestaltet sein. Die übergeordnete Steuereinheit dient zur Prozesssteuerung, zur Prozessvisualisierung, zur Prozessüberwachung sowie zur Inbetriebnahme und Bedienung der Feldgeräte und wird auch als Konfigurier-/Managementsystem bezeichnet. Auch ist es bekannt geworden, Feldgeräte mit Internetschnittstellen zwecks Kommunikation und/oder Energieversorgung auszurüsten.

In zunehmendem Maße sind Feldgeräte der Automatisierungstechnik mit einer Nahfeldkommunikationsschnittstelle ausgestattet. Bevorzugt handelt es sich bei einer entsprechenden Nahfeldkommunikationsschnittstelle (NFC Schnittstelle) um eine standardisierte Schnittstelle, z.B. eine Bluetooth- bzw. eine Bluetooth Low Energy- (BLE) Schnittstelle. Unter Verwendung einer entsprechenden App sind die Feldgeräte dann mittels handelsüblicher Kommunikationstools (Smartphone, Tablet, Laptop, ...) bedienbar.

Im Zusammenhang mit der Erfindung wird übrigens unter dem Begriff "Bedienen eines Feldgeräts" die Anzeige von Konfigurations-, Parametrier-, Mess- und Statusdaten oder sonstigen das Feldgerät betreffenden Daten verstanden, ebenso wie das Parametrieren oder Konfigurieren des Feldgeräts im Rahmen einer Inbetriebnahme oder im Rahmen eines Serviceeinsatzes. Weiterhin kann Bedienen das Überspielen eines Firmware- oder Software-Updates in das Feldgerät beinhalten.

Bei Feldgeräten ist es möglich, die Firmware auszutauschen. Hierzu werden Flash-Speicher bzw. EEPROMs über spezielle Verfahren gelöscht und neu beschrieben. Das "Flashen" ermöglicht die Aktualisierung, die Fehlerbehebung sowie das Nachrüsten zusätzlicher Funktionen. Weiterhin ist es immer wieder notwendig, Messprogramme, die auf die einzelnen Feldgerätetypen abgestellt sind, zwecks Fehlerbehebung, Verbesserung oder Hinzufügen von Funktionen an den entsprechenden Feldgeräten auszutauschen.

Messprogramme bzw. Messalgorithmen werden über Firmware-Updates vom Servicetechniker direkt am Feldgerät z.B. über eine proprietäre Serviceschnittstelle oder über eine handelsübliche Nahfeldkommunikationsschnittstelle, z.B. Bluetooth Low Energy, in das Feldgerät geladen. Alternativ ist es bekannt geworden, das Update mittels einer übergeordneten Steuereinheit, z.B. Fieldgate der Firmengruppe Endress+Hauser, durchzuführen. Nach Aufspielen des neuen Messalgorithmus bzw. nach dem Updaten der Firmware ist es erforderlich, das Feldgerät ggf. mehrfach zu kalibrieren.

Stressparameter, denen ein Feldgerät ständig oder zyklisch an seinem Messort ausgesetzt ist und die durchaus einen erheblichen Einfluss das Feldgerät haben können, sind relativ schwer in den Griff zu bekommen. Da sich die Stressparameter durchaus negativ auf die Messgenauigkeit bzw. die Messperformance eines Feldgeräts auswirken können, wird versucht, das Problem über die Durchführung wiederholter Kalibrierungen des Feldgeräts in den Griff zu bekommen. Es versteht sich von selbst, dass diese Vorgehensweise sehr zeitaufwändig ist.

Die Stressparameter rühren insbesondere her von den physikalischen oder chemischen Gegebenheiten am jeweiligen Einsatzort des Feldgeräts. Es kann sich um Größen wie Temperatur, Druck, Vibrationen/Erschütterungen, Luftfeuchte, UV-Einstrahlung, Strahlenbelastung, usw. handeln. Einen erheblichen Einfluss hat natürlich auch die Beschaffenheit des Mediums selbst; so spielen der pH-Wert und die Aggressivität, die Abrasivität des Mediums, usw. eine wichtige Rolle.

Die Patentanmeldung US 2008/015814 A1 beschreibt ein Verfahren und ein System zur Bestimmung von Fehlern in einer Industrieanlage. Die US 2016/142160 A1 offenbart ein Verfahren zur Wartung und Kalibrierung von Sensoren in einem Umweltsensornetz.

Der Erfindung liegt die Aufgabe zugrunde, den Aufwand, der zwecks Kalibrierung von Feldgeräten zur Sicherstellung der Messperformance betrieben wird, zu reduzieren.

Die Aufgabe wird gelöst durch ein Verfahren zur Verbesserung der Messperformance von Feldgeräten der Automatisierungstechnik, wobei jedes der Feldgeräte zumindest eine physikalische oder chemische Prozessgröße eines Mediums unter Verwendung eines Messalgorithmus' bestimmt oder überwacht, wobei jedes der Feldgeräte -abgestimmt auf die jeweilige Messaufgabe- mit spezifischen Kalibrierdaten kalibriert ist und wobei jedes der Feldgeräte an seiner jeweiligen Messposition bestimmbaren Umgebungseinflüssen ausgesetzt ist. Das Verfahren weist die folgenden Verfahrensschritte auf:
- Erfassung der Kalibrierdaten der Feldgeräte und Erfassung von jeweils zumindest einer Umgebungsinformation aus der Umgebung der Feldgeräte in definierten Zeitabständen,
- Abspeichern der mit einem Zeitstempel versehenen Kalibrierdaten und Umgebungsinformationen in einem Datenspeicher,
- Auswahl zumindest einer Gruppe von Feldgeräten, die eine physikalische oder chemische Prozessgröße über den im Wesentlichen gleichen Messalgorithmus bestimmen und die bezüglich der erfassten Umgebungsinformationen innerhalb vorgegebener Toleranzgrenzen übereinstimmen,
- Korrelation der über die Zeit erfassten Kalibrierdaten und der über die Zeit erfassten Umgebungsinformationen,
- Erstellung eines mathematischen Modells, das den funktionalen Zusammenhang zwischen den Kalibrierdaten und den erfassten Umgebungsinformationen abbildet,
- Adaption des Messalgorithmus' der Feldgeräte der ausgewählten Gruppe anhand des ermittelten mathematischen Modells,
- Übertragung des adaptierten Messalgorithmus' in alle Feldgeräte der ausgewählten Gruppe.

Allgemein gesprochen, wird der Kalibrieraufwand der Feldgeräte im Feld - also z.B. in einer Automatisierungsanlage - reduziert, indem eine repräsentative Gruppe von Feldgeräten gebildet wird, die entsprechenden und zuvor genannten Daten der Feldgeräte dieser Gruppe analysiert werden, und die Ergebnisse der Analyse, sprich der adaptierte Messalgorithmus und ev. auch das zugrunde liegende mathematische Modell, auf alle Feldgeräte der Gruppe übertragen werden.

Die Vorteile sind insbesondere darin zu sehen, dass die Messperformance der einzelnen Feldgeräte verbessert wird. Im Idealfall werden Nachkalibrierungen im Feld gänzlich überflüssig, so dass der Serviceaufwand erheblich reduziert wird.

Was unter Feldgeräten im Zusammenhang mit der Erfindung zu verstehen ist, wurde bereits in der Beschreibungseinleitung dargelegt. Auf eine Wiederholung wird verzichtet. Als Umgebungsinformationen werden insbesondere physikalische oder chemische Messgrößen herangezogen, die Einfluss auf das Feldgerät, insbesondere auf die Alterung des Feldgeräts haben. Die Umgebungsinformationen sind quantitativ und/oder qualitativ bestimmbar. Quantitativ bedeutet hierbei, dass die Größen von Messgeräten gemessen werden; qualitativ bedeutet, dass ihre Auswirkungen auf die Feldgeräte hinreichend genau bestimmt werden. Als Beispiel kann hier eine zeitweise betriebene Pumpe genannt werden, die während des Betriebs leichte, mittlere oder starke Vibrationen verursacht.

Gemäß einer Weiterbildung des erfindungsgemäßen Verfahrens werden die Kalibrierdaten und die Umgebungsinformationen in der Datenbank abgespeichert. Bevorzugt handelt es sich aufgrund der großen Anzahl der Daten, die mitunter weltweit an unterschiedlichen Positionen bestimmt und gesammelt werden, um eine cloudfähige Datenbank.

Im Rahmen von "Industrial Internet of Things (IIoT)" und "Industrie 4.0" gewinnen cloudfähige Datenbanken zur Speicherung und Verarbeitung großer Datenmengen (Big Data), die aus industriellen Automatisierungsanlagen stammen, zunehmend an Bedeutung. Als cloudfähige Datenbank wird eine Datenbank bezeichnet, die kompatibel zur Cloud-Computing-Technologie ist. Unter Cloud Computing wird in diesem Fall das Verarbeiten und Speichern von Informationen und das Zugreifen auf die gespeicherten Informationen über das Internet verstanden.

Zum Zugriff auf eine cloudfähige Datenbank und zum Austausch der Daten werden sogenannte Schnittstellen zur Anwendungsprogrammierung (engl.: "Application Programm Interface", kurz "API") verwendet. Diese definieren die erlaubten Befehle und Zugriffsarten auf die cloudfähige Datenbank. Vor dem Zugriff verlangt die API eine Authentifikation des Benutzers. Diese Authentifikation wird üblicherweise über einen Schlüssel (einen sogenannten "API key") realisiert.

Obwohl die cloudfähige Datenbank als bevorzugte Lösung gelten darf, ist es natürlich auch möglich, dass die Datenbank einem Edge Device, einem der Feldgeräte oder einem lokalen Server zugeordnet ist. Ein Edge Device stellt übrigens insbesondere die Kommunikation zwischen den in einem definierten Raumbereich einer Automatisierungsanlage angeordneten Feldgeräten und zumindest einem internen oder externen Server sicher. Es hat also die Funktion eines zwischengeschalteten Datensammlers und ggf. Übersetzers von einem Kommunikationsprotokoll auf ein anderes, z.B. zwischen einem Feldbusprotokoll und einem Internet-/Intranet-Protokoll.

Als vorteilhaft wird es im Zusammenhang mit dem erfindungsgemäßen Verfahrens erachtet, wenn das mathematisches Modell zur Erstellung eines adaptierten Messalgorithmus mittels der Methoden des Machine Learning erstellt wird. Insbesondere ist vorgesehen, dass das mathematische Modell unter Verwendung zumindest eines neuronalen Netzes erstellt wird. Alternative Ausgestaltungen des erfindungsgemäßen Verfahrens erstellen das mathematische Modell unter Verwendung der Nearest Neighbor Methode, unter Verwendung von Entscheidungsbäumen und/oder unter Verwendung einer Support Vector Machine. Weitere Varianten, die in Verbindung mit der erfindungsgemäßen Lösung einsetzbar sind, sind die Methoden der Linear oder Nonlinear Regression, Ensembles, Naive Bayes oder Logistic Regression. Bevorzugt erfolgt die Erstellung des adaptierten Messalgorithmus in einer Cloudanwendung.

Die Übertragung der Kalibrierdaten und der Umgebungsinformation der Feldgeräte und/oder des adaptierten Messalgorithmus' in die Feldgeräte der ausgewählten Gruppe erfolgt drahtgebunden oder drahtlos. Findet eine Cloudlösung Anwendung und haben die Feldgeräte geeignete Schnittstellen, so ist ein direkter Austausch über Internet/Intranet möglich. Andernfalls kommt ein Edge Device zum Einsatz. Es versteht sich von selbst, dass die ausgetauschten Daten und Informationen aus Sicherheitsgründen verschlüsselt übertragen werden.

Das erfindungsgemäße Verfahren als solches oder in einer seiner unterschiedlichen Ausgestaltungen wird bevorzugt nicht einmalig auf die Feldgeräte angewendet. Vielmehr ist vorgesehen, dass die einzelnen Verfahrensschritte des erfindungsgemäßen Verfahrens zyklisch oder iterativ wiederholt werden. Die in nachfolgenden Kalibrier- und/oder Messzyklen gesammelten Daten einer ausgewählten Gruppe von Feldgeräten, die unter vergleichbaren Umgebungs- und Messbedingungen eingesetzt sind, werden dazu genutzt, das mathematische Modell zu überprüfen. Ggf. wird der adaptierte Messalgorithmus verifiziert und/oder erneut angepasst.

Als besonders vorteilhaft wird es in Verbindung mit dem erfindungsgemäßen Verfahren erachtet, wenn anhand der Kalibrierdaten und der Umgebungsinformationen Aussagen bezüglich der verbleibenden Rest-Lebensdauer einzelner Feldgeräte und/oder der Rest-Lebensdauer der in einer Anlage der Automatisierungstechnik installierten Feldgeräte gemacht werden. Da zumindest alle dominierenden Einflussgrößen auf jede der ausgewählten Gruppen von Feldgeräten bekannt sind, ist es möglich, die Rest-Lebensdauer der Feldgeräte in den einzelnen Gruppen in hohem Maße zuverlässig vorherzusagen.

Darüber hinaus ermöglicht es die hinreichend gut bekannte Restlebensdauer der Feldgeräte bzw. die zuverlässige Kenntnis der Umgebungseinflüsse auf die Lebensdauer/Standzeit der Feldgeräte, dass die Feldgeräte-Entwickler Rückschlüsse ziehen können, welche Verbesserung bei zukünftigen Neu- oder Weiterentwicklungen von Feldgeräten sinnvoll und notwendig sind.

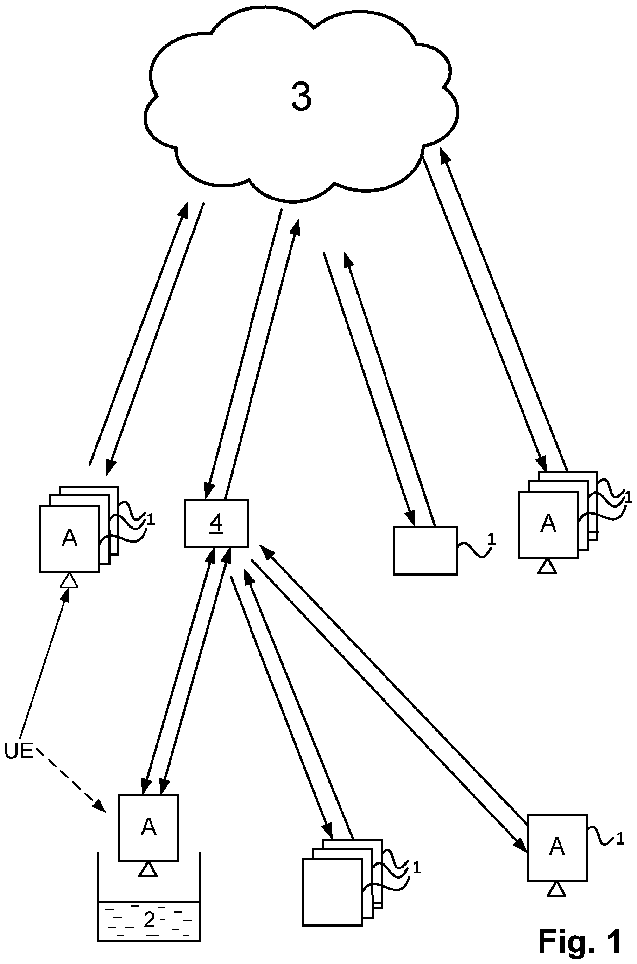

Die Erfindung wird anhand der Fig. 1 näher erläutert. Fig. 1 zeigt eine schematische Darstellung der einzelnen Verfahrensschritte einer vorteilhaften Ausgestaltung des erfindungsgemäßen Verfahrens zur Verbesserung der Messperformance von Feldgeräten 1 der Automatisierungstechnik. Die Feldgeräte 1 sind in unterschiedlichen Automatisierungsanlagen, ggf. in weltweit verteilten Automatisierungsanlagen, installiert. Jedes der Feldgeräte 1 ist so ausgelegt, dass es zumindest eine physikalische oder chemische Prozessgröße eines Mediums 2 über ein entsprechend ausgestaltetes Sensorelement erfasst und unter Verwendung eines definierten Messalgorithmus' bestimmt oder überwacht. Jedes der Feldgeräte 1 ist entsprechend der jeweiligen Messaufgabe mit spezifischen Kalibrierdaten kalibriert. Darüber hinaus ist jedes der Feldgeräte 1 an seiner jeweiligen Messposition quantitativ und/oder qualitativ messbaren Umgebungseinflüssen ausgesetzt.

In einem ersten Schritt werden die Kalibrierdaten der Feldgeräte 1 und/oder geeignete (also die Messperformance des Feldgeräts beeinflussende) Umgebungsinformationen aus der Umgebung der Feldgeräte 1 in definierten Zeitabständen gesammelt. Die Zeitabstände sind so bemessen, dass die Daten Änderungen der Umgebungsbedingungen innerhalb vorgegebener Toleranzen widerspiegeln.

In einem zweiten Schritt werden die mit einem Zeitstempel versehenen Kalibrierdaten und Umgebungsinformationen in einer Datenbank 3 abgespeichert. Da bevorzugt Big Data Analysen eingesetzt werden, handelt es sich bei der Datenbank um eine cloudfähige Datenbank. Entweder liefern die Feldgeräte die Kalibrierdaten und Umgebungsinformationen direkt an die cloudfähige Datenbank, oder die Daten werden z.B. von einem in die Netzwerke der Automatisierungsanlagen eingebundenes Edge Devices 4 gesammelt und dann an die Datenbank 3 weitergeleitet. Durch die Vermittlungsfunktion eines Edge Devices müssen die Feldgeräte 1 nicht mit einer Internetschnittstelle ausgestattet sein. Sind Internet-Schnittstellen an jedem der Feldgeräte 1 vorhanden, kann der Datentransfer auch direkt zu der Datenbank erfolgen.

Von einem Software Programm werden anschließend z.B. alle Feldgeräte 1 ausgewählt, die einer Gruppe A angehören. Die Gruppe A ist dadurch gekennzeichnet, dass die hier gelisteten Feldgeräte dem gleichen Feldgerätetyp angehören und die gleiche physikalische oder chemische Prozessgröße über den im Wesentlichen gleichen Messalgorithmus bestimmen. Weiterhin stimmen die erfassten Umgebungsinformationen aller Feldgeräte 1 der ausgewählten Gruppe A innerhalb vorgegebener Toleranzgrenzen überein.

In einem vierten Schritt werden die über die Zeit erfassten Kalibrierdaten und die über die Zeit erfassten Umgebungsinformationen der Feldgeräte 1 der Gruppe A genutzt, um ein mathematisches Modell zu erstellen. Das mathematische Modell bildet den funktionalen Zusammenhang zwischen den Kalibrierdaten und den erfassten Umgebungsinformationen ab. Geeignete Methoden aus dem Bereich der Künstlichen Intelligenz wurden bereits an vorhergehender Stelle genannt. Ein Fachbuch zu dem Thema KI ist beispielswiese von Herrn Prof. Ertl veröffentlicht worden (Grundkurs Künstliche Intelligenz 4. Auflage).

Anhand des erstellten mathematischen Modells wird in einem fünften Verfahrensschritt der Messalgorithmus der Feldgeräte 1 der ausgewählten Gruppe A adaptiert bzw. angepasst. Letztlich wird der adaptierten Messalgorithmus in alle Feldgeräte 1 der ausgewählten Gruppe A übertragen. Dieser ersetzt dann zukünftig den ursprünglich in den Feldgeräten 1 der ausgewählten Gruppe A vorhandenen Messalgorithmus. Zukünftig gelieferte Feldgeräte 1 werden bereits im Rahmen der Fertigung mit dem adaptierten Messalgorithmus ausgestattet.

Da alle Einflussgrößen auf alle Feldgeräte der unterschiedlichen ausgewählten Gruppen von Feldgeräten 1 bekannt sind, ist es möglich, die Rest-Lebensdauer der Feldgeräte 1 in den einzelnen Gruppen in hohem Maße zuverlässig vorherzusagen.

Darüber hinaus ermöglicht es die hinreichend genaue Kenntnis der Restlebensdauer der Feldgeräte 1 bzw. die zuverlässige Kenntnis der Umgebungseinflüsse auf die Standzeit der Feldgeräte 1, dass die Feldgeräte-Entwicklern Rückschlüsse ziehen können, welche Verbesserung bei zukünftigen Neu- oder Weiterentwicklungen von Feldgeräten 1 sinnvoll und notwendig sind.

## Patentansprüche

1. Verfahren zur Verbesserung der Messperformance von Feldgeräten (1) der Automatisierungstechnik, wobei jedes der Feldgeräte (1) zumindest eine physikalische oder chemische Prozessgröße eines Mediums (2) unter Verwendung eines Messalgorithmus' bestimmt oder überwacht, wobei jedes der Feldgeräte (1), abgestimmt auf die jeweilige Messaufgabe, mit spezifischen Kalibrierdaten kalibriert ist und wobei jedes der Feldgeräte (1) an seiner jeweiligen Messposition messbaren Umgebungseinflüssen ausgesetzt ist, wobei das Verfahren die folgenden Verfahrensschritte aufweist:
Erfassung der Kalibrierdaten der Feldgeräte (1) und Erfassung von jeweils zumindest einer Umgebungsinformation aus der Umgebung der Feldgeräte (1) in definierten Zeitabständen,
Abspeichern der mit einem Zeitstempel versehenen Kalibrierdaten und Umgebungsinformationen in einer Datenbank (3),
Auswahl zumindest einer Gruppe (A) von Feldgeräten (1), die eine physikalische oder chemische Prozessgröße über den im Wesentlichen gleichen Messalgorithmus bestimmen und die bezüglich der erfassten Umgebungsinformationen innerhalb vorgegebener Toleranzgrenzen übereinstimmen,
Korrelation der über die Zeit erfassten Kalibrierdaten und der über die Zeit erfassten Umgebungsinformationen,
Erstellung eines mathematischen Modells, das den funktionalen Zusammenhang zwischen den Kalibrierdaten und den erfassten Umgebungsinformationen abbildet,
Adaption des Messalgorithmus' der Feldgeräte (1) der ausgewählten Gruppe (A) anhand des ermittelten mathematischen Modells,
Übertragung des adaptierten Messalgorithmus' in alle Feldgeräte (1) der ausgewählten Gruppe (A).

2. Verfahren nach Anspruch 1,
wobei als Umgebungsinformationen insbesondere physikalische oder chemische Messgrößen herangezogen werden, die Einfluss auf die Alterung der Messgeräte haben.

3. Verfahren nach Anspruch 1 oder 2,
wobei die Datenbank (3), in der die Kalibrierdaten und die Umgebungsinformationen abgespeichert werden, einer Cloudanwendung, einem Edge Device, das insbesondere die Kommunikation zwischen den in einem definierten Bereich einer Automatisierungsanlage angeordneten Feldgeräten (1) und zumindest einem externen Server sicherstellt, einem der Feldgeräte (1) oder einem lokalen Server zugeordnet wird.

4. Verfahren nach Anspruch 1, 2 oder 3,
wobei das mathematisches Modell mittels der Methoden des Machine Learning erstellt wird.

5. Verfahren nach Anspruch 1, 2 oder 3,
wobei das mathematische Modell unter Verwendung zumindest eines neuronalen Netzes erstellt wird.

6. Verfahren nach Anspruch 1, 2 oder 3,
wobei das mathematische Modell unter Verwendung der Nearest Neighbor Methode, unter Verwendung von Entscheidungsbäumen und/oder unter Verwendung einer Support Vector Machine erstellt wird.

7. Verfahren nach einem oder mehreren der vorhergehenden Ansprüche
wobei die Erstellung des adaptierten Messalgorithmus in einer Cloudanwendung erfolgt.

8. Verfahren nach einem oder mehreren der vorhergehenden Ansprüche,
wobei die Übertragung der Kalibrierdaten und der Umgebungsinformation und/oder des adaptierten Messalgorithmus' in die Feldgeräte der ausgewählten Gruppe drahtgebunden oder drahtlos erfolgt.

9. Verfahren nach einem oder mehreren der vorhergehenden Ansprüche,
wobei die Übertragung der Kalibrierdaten und der Umgebungsinformation und/oder des adaptierten Messalgorithmus' in die Feldgeräte (1) der ausgewählten Gruppe (A) verschlüsselt erfolgt.

10. Verfahren nach einem oder mehreren der Ansprüche 1-7,
wobei die Verfahrensschritte des Verfahrens zyklisch oder iterativ wiederholt werden, so dass aufgrund nachfolgender Kalibrierungen der Feldgeräte (1) der ausgewählten Gruppe (A) das mathematische Modell und nachfolgend der adaptierte Messalgorithmus verifiziert und/oder angepasst werden.

11. Verfahren nach einem oder mehreren der vorhergehenden Ansprüche,
wobei anhand der Kalibrierdaten und der Umgebungsinformationen Aussagen bezüglich der verbleibenden Rest-Lebensdauer einzelner Feldgeräte (1) und/oder der Rest-Lebensdauer der in einer Anlage der Automatisierungstechnik installierten Feldgeräte (1) gemacht werden.

12. Verfahren nach einem oder mehreren der vorhergehenden Ansprüche,
wobei anhand der Umgebungseinflüsse auf die Standzeit der Feldgeräte (1) Rückschlüsse hinsichtlich der Verbesserung bei zukünftigen Neuentwicklungen von Feldgeräten (1) gezogen werden.

## Claims

1. A method for improving the measuring performance of automation field devices (1), wherein each of the field devices (1) determines or monitors at least one physical or chemical process variable of a medium (2) using a measuring algorithm, wherein each of the field devices (1), tailored to the particular measuring task, is calibrated using specific calibration data, and wherein each of the field devices (1) is exposed to measurable environmental influences at its particular measuring position, the method comprising the following method steps:
capturing the calibration data of the field devices (1) and capturing in each case at least one item of environmental information from the environment of the field devices (1) at defined time intervals,
storing the calibration data and environmental information provided with a time stamp in a database (3),
selecting at least one group (A) of field devices (1) that determine a physical or chemical process variable using the essentially identical measuring algorithm and that correspond with respect to the captured environmental information within prescribed tolerance levels,
correlating the calibration data captured over time and the environmental information captured over time,
creating a mathematical model depicting the functional relationship between the calibration data and the captured environmental information,
adapting the measuring algorithm of the field devices (1) of the selected group (A) on the basis of the determined mathematical model, and
transmitting the adapted measuring algorithm to all field devices (1) of the selected group (A).

2. The method as claimed in claim 1,
wherein in particular physical or chemical measured variables which influence the ageing of the measuring devices are used as the environmental information.

3. The method as claimed in claim 1 or 2,
wherein the database (3) in which the calibration data and the environmental information are stored is assigned to a cloud application, an edge device which in particular ensures communication between the field devices (1) arranged in a defined area of an automation system and at least one external server, to one of the field devices (1), or to a local server.

4. The method as claimed in claim 1, 2 or 3,
wherein the mathematical model is created using methods of machine learning.

5. The method as claimed in claim 1, 2 or 3,
wherein the mathematical model is created using at least one neural network.

6. The method as claimed in claim 1, 2 or 3,
wherein the mathematical model is created using the nearest neighbor method, using decision trees and/or using a support vector machine.

7. The method as claimed in one or more of the preceding claims,
wherein the adapted measuring algorithm is created in a cloud application.

8. The method as claimed in one or more of the preceding claims,
wherein the calibration data and the environmental information and/or the adapted measuring algorithm are transmitted to the field devices of the selected group wired or wirelessly.

9. The method as claimed in one or more of the preceding claims,
wherein the calibration data and the environmental information and/or the adapted measuring algorithm are transmitted to the field devices (1) of the selected group (A) in encrypted form.

10. The method as claimed in one or more of claims 1-7,
wherein the method steps of the method are repeated cyclically or iteratively so that the mathematical model and subsequently the adapted measuring algorithm are verified and/or adapted on the basis of subsequent calibrations of the field devices (1) of the selected group (A).

11. The method as claimed in one or more of the preceding claims,
wherein statements relating to the remaining residual service life of individual field devices (1) and/or the residual service life of the field devices (1) installed in an automation system are made on the basis of the calibration data and the environmental information.

12. The method as claimed in one or more of the preceding claims,
wherein conclusions regarding the improvement of future new developments of field devices (1) are drawn on the basis of the environmental influences on the service life of the field devices (1).

## Revendications

1. Procédé destiné à l'amélioration de la performance de mesure d'appareils de terrain (1) de la technique d'automatisation, chacun des appareils de terrain (1) déterminant ou surveillant au moins une grandeur de process physique ou chimique d'un produit (2) en utilisant un algorithme de mesure, chacun des appareils de terrain (1) étant étalonné, de manière adaptée à la tâche de mesure respective, avec des données d'étalonnage spécifiques et chacun des appareils de terrain (1) étant exposé à des influences environnementales mesurables à la position de mesure respective desdits appareils, lequel procédé comprend les étapes de procédé suivantes :
Saisie des données d'étalonnage des appareils de terrain (1) et saisie à chaque fois d'au moins une information environnementale provenant de l'environnement des appareils de terrain (1) à des intervalles de temps définis,
Enregistrement des données d'étalonnage et des informations environnementales munies d'un horodatage dans une base de données (3),
Sélection d'au moins un groupe (A) d'appareils de terrain (1) qui déterminent une grandeur de process physique ou chimique pour l'essentiel par le biais du même algorithme de mesure, et qui concordent en ce qui concerne les informations environnementales saisies à l'intérieur de limites de tolérance prédéfinies, Corrélation des données d'étalonnage acquises au fil du temps et des informations environnementales acquises au fil du temps,
Création d'un modèle mathématique qui représente la relation fonctionnelle entre les données d'étalonnage et les informations environnementales saisies, Adaptation de l'algorithme de mesure des appareils de terrain (1) du groupe sélectionné (A) à l'aide du modèle mathématique déterminé,
Transmission de l'algorithme de mesure adapté à tous les appareils de terrain (1) du groupe sélectionné (A).

2. Procédé selon la revendication 1,
pour lequel on utilise comme informations environnementales notamment des grandeurs de mesure physiques ou chimiques qui ont une influence sur le vieillissement des appareils de mesure.

3. Procédé selon la revendication 1 ou 2,
pour lequel la base de données (3), dans laquelle les données d'étalonnage et les informations environnementales sont stockées, est associée à une application cloud, à un Edge Device qui assure notamment la communication entre les appareils de terrain (1) disposés dans une zone définie d'une installation d'automatisation et au moins un serveur externe, l'un des appareils de terrain (1) ou un serveur local.

4. Procédé selon la revendication 1, 2 ou 3,
pour lequel le modèle mathématique est créé à l'aide des méthodes d'apprentissage automatique.

5. Procédé selon la revendication 1, 2 ou 3,
pour lequel le modèle mathématique est créé en utilisant au moins un réseau neuronal.

6. Procédé selon la revendication 1, 2 ou 3,
pour lequel le modèle mathématique est établi en utilisant la méthode du plus proche voisin, en utilisant des arbres de décision et/ou en utilisant une machine à vecteurs de support.

7. Procédé selon l'une ou plusieurs des revendications précédentes,
pour lequel la création de l'algorithme de mesure adapté est effectuée dans une application cloud.

8. Procédé selon l'une ou plusieurs des revendications précédentes,
pour lequel la transmission des données d'étalonnage et des informations environnementales et/ou de l'algorithme de mesure adapté dans les appareils de terrain du groupe sélectionné s'effectue par fil ou sans fil.

9. Procédé selon l'une ou plusieurs des revendications précédentes,
pour lequel la transmission des données d'étalonnage et des informations environnementales et/ou de l'algorithme de mesure adapté dans les appareils de terrain (1) du groupe sélectionné (A) s'effectue de manière cryptée.

10. Procédé selon l'une ou plusieurs des revendications 1 à 7,
pour lequel les étapes du procédé sont répétées de manière cyclique ou itérative, de sorte que, sur la base d'étalonnages ultérieurs des appareils de terrain (1) du groupe sélectionné (A), le modèle mathématique et ensuite l'algorithme de mesure adapté sont vérifiés et/ou adaptés.

11. Procédé selon l'une ou plusieurs des revendications précédentes,
pour lequel, à l'aide des données d'étalonnage et des informations environnementales, on fait des évaluations concernant la durée de vie restante d'appareils de terrain (1) individuels et/ou la durée de vie résiduelle des appareils de terrain (1) montés dans une installation de la technique d'automatisation.

12. Procédé selon l'une ou plusieurs des revendications précédentes,
pour lequel, à l'aide des influences environnementales sur la durée de vie des appareils de terrain (1), on tire des conclusions concernant l'amélioration lors de nouveaux développements futurs d'appareils de terrain (1).
